# EUROPEAN PATENT SPECIFICATION

(11) **EP 2 163 584 B1**
(45) Date of publication and mention of the grant of the patent: **18.04.2012**
(21) Application number: 09011620.3
(22) Date of filing: 10.09.2009
(51) Int. Cl.: C08L 83/04, H01L 33/56, C08L 83/05, C08L 83/07

(54) **Curable silicone resin composition, cured product thereof, and opaque silicone adhesive sheet formed from the composition**
Härtbare Silikonharzzusammensetzung, gehärtetes Produkt daraus und opake Silikonklebefolie aus der Zusammensetzung
Composition de résine en silicone durcissable, son produit durci, et feuille adhésive en silicone opaque formée à partir de la composition

(30) Priority: 11.09.2008 JP 2008233104
(43) Date of publication of application: 17.03.2010
(73) Proprietor: Shin-Etsu Chemical Co., Ltd., Chiyoda-ku Tokyo (JP)
(72) Inventor: Kashiwagi, Tsutomu, Matsuida-machi Annaka-shi Gunma-ken (JP)
(74) Representative: Peters, Hajo

(56) References cited:
- JP-A- 2002 309 090
- US-A1- 2008 033 071

## Description

### BACKGROUND OF THE INVENTION

### 1. Field of the Invention

The present invention relates to a curable silicone resin composition, a cured product thereof, and an opaque silicone adhesive sheet formed from the composition.

### 2. Description of the Prior Art

In liquid crystal displays (hereafter also abbreviated as LCD), a driver IC is typically mounted on a chip-on-glass mounted electrode. It is known that this driver IC may malfunction if exposed to intense light. Particularly, in a mobile telephone fitted with a camera, the driver IC is prone to malfunctions caused by the intense light of the camera flash. In order to protect the electrodes of LCDs (hereafter also referred to as liquid crystal electrodes) and shield the electrodes from light, thereby preventing malfunction of the driver IC, electrode protective agents containing an added opaque pigment have been conventional developed and used. Solvent-based resins and alcohol-free resins are typically used for these electrode protective agents, but these resins have drawbacks in that it takes a long time to cure the resins and in that the cured product surface exhibits a large amount of tack. In order to address these drawbacks, electrode protective agents that use a rapidly curing and highly reliable ultraviolet-curable resin have also been developed, but the addition of an opaque pigment tends to cause a deterioration in the curability of the resin interior, making the resins impractical. Accordingly, a method has been developed in which the liquid crystal electrode is coated with an ultraviolet-curable resin, and following curing of the resin, the structure is protected with an opaque tape. However, the complexity of this method means that the productivity tends to deteriorate, and cost increases are also a problem.

An example of the conventional technology relating to the present invention is disclosed within the patent publication listed below.
[Patent Document 1] JP 2001-013513 A

JP 2002 309090 by Shin-Etsu Chem. Co. Ltd. discloses a semiconductive silicone rubber composition comprising a polyorganosiloxane, an organohydrogen-polysiloxane, graphite carbon black, and a platinum group metal based catalyst.

### SUMMARY OF THE INVENTION

An object of the present invention is to provide a curable silicone resin composition that is solid at room temperature and therefore easy to handle; a cured product which is obtained by curing the composition, protects the liquid crystal electrode and shields the electrodes from light, thereby preventing malfunction of the driver IC, exhibits excellent mechanical properties and flexibility, and displays minimal surface tack; and an opaque silicone adhesive sheet formed from the composition.

As a result of intensive investigation aimed at achieving the above object, the inventor of the present invention discovered that a curable silicone resin composition described below, a cured product thereof, and an opaque silicone adhesive sheet formed from the composition were able to achieve the above object, and the inventor was therefore able to complete the present invention.

In other words, a first aspect of the present invention provides a curable silicone resin composition that is solid at room temperature, the composition comprising:
(A) an organopolysiloxane having a resin structure, consisting of R¹SiO_{1.5} units, R²₂SiO units and R³ₐR⁴_{b}SiO_{(4-a-b)/2} units (wherein, R¹, R² and R³ each independently represents a hydroxyl group, methyl group, ethyl group, propyl group, cyclohexyl group or phenyl group, each R⁴ independently represents a vinyl group or allyl group, a represents 0, 1 or 2, and b represents 1 or 2, provided that a+b is 2 or 3), and
   including a structure in which at least a portion of the R²₂SiO units are connected in a continuous repeating sequence, and the number of units in the repeating sequence is within a range from 5 to 50,
(B) an organohydrogenpolysiloxane having a resin structure, consisting of R¹SiO_{1.5} units, R²₂SiO units and R³_{c}H_{d}SiO_{(4-c-d)/2} units (wherein, R¹, R² and R³ are each independently as defined above, c represents 0, 1 or 2, and d represents 1 or 2, provided that c+d is 2 or 3), and
   including a structure in which at least a portion of the R²₂SiO units are connected in a continuous repeating sequence, and the number of units in the repeating sequence is within a range from 5 to 50: in sufficient amount that the molar ratio of hydrogen atoms bonded to silicon atoms within component (B) relative to the combined total of vinyl groups and allyl groups within component (A) is within a range from 0.1 to 4.0,
(C) a platinum group metal-based catalyst: in an effective amount,
(D) either one or both of an opaque pigment and an opaque dye, and
(E) a reaction retarder, wherein
   a layer of thickness 100 µm formed from a cured product of the composition exhibits a light transmittance of not more than 5% across the entire visible light range wherein either one or both of component (A) and component (B) comprises a silanol group and wherein when component (A) comprises a silanol group, then a silanol group content within component (A) is within a range from 0.01 to 0.3 mol/100 g, and when component (B) comprises a silanol group, then a silanol group content within component (B) is within a range from 0.01 to 0.3 mol/100 g.

A second aspect of the present invention provides a silicone resin cured product obtained by curing the above curable silicone resin composition.

A third aspect of the present invention provides an opaque silicone adhesive sheet formed from the above curable silicone resin composition.

A fourth aspect of the present invention provides a method of protecting an electronic component and shielding the electronic component from light, the method comprising adhering or pressure bonding the above curable silicone resin composition to a surface of the electronic component, and then curing the composition.

A fifth aspect of the present invention provides use of the above curable silicone resin composition for protecting an electronic component and shielding the electronic component from light.

The curable silicone resin composition of the present invention is solid at room temperature. Therefore, firstly, the composition is easy to handle and easy to process into all manner of shapes (such as a sheet for example). Secondly, the composition is unlikely to suffer separation or precipitation of the opaque pigment or the like that has been added to the composition, even upon long-term storage. This means that the composition can be stably used so that electronic components, and particularly electronic components that require shielding from light, such as liquid crystal electrodes can be protected and shielded from light, and so that malfunctions of driver ICs can be prevented. Furthermore, the composition can be readily molded using conventional molding apparatus. The composition cures readily at comparatively low heating temperatures, meaning a cured product of the present invention having excellent mechanical properties and opacity and minimal surface tack can be obtained with comparative ease. Although the resulting cured product is hard, it also exhibits excellent flexibility. The composition can be easily formed into a coating of uniform thickness. By pressure bonding or adhering the composition, or the opaque silicone adhesive sheet obtained in the manner described above, to an electronic component, and particularly an electronic component that requires shielding from light, such as a liquid crystal electrode, and subsequently curing the composition or sheet, the electronic component, and particularly an electronic component that requires shielding from light, can be protected and shielded from light. Specifically, a liquid crystal electrode can be protected and shielded from light, enabling malfunction of the driver IC to be prevented. In this manner, the curable silicone resin composition of the present invention is ideal as a protective coating agent for liquid crystal electrodes. Moreover, the composition is not limited to use with liquid crystal electrodes, but can also be used in a wide variety of other applications, including as a protective coating agent for all manner of electronic components, and particularly electronic components that require shielding from light.

### DETAILED DESCRIPTION OF THE PREFERRED EMBODIMENTS

A more detailed description of the present invention is presented below. When used herein, the term "room temperature" describes a temperature from 15 to 30°C. Further, when used herein, Ph represents a phenyl group, Me represents a methyl group, Et represents an ethyl group, and Vi represents a vinyl group.

### [Curable Silicone Resin Composition]

The curable silicone resin composition of the present invention comprises the components (A) to (E) described below. The composition of the present invention is solid at room temperature, and is therefore easy to handle. The composition of the present invention is preferably a plastic solid at room temperature.

A description of each of the components contained within the silicone resin composition of the present invention is presented below.

### - (A) Organopolysiloxane having Resin Structure -

The component (A), which represents one of the important structural components of the composition of the present invention, is an organopolysiloxane having a resin structure (namely, a three dimensional network-type structure), which consists of R¹SiO_{1.5} units, R²₂SiO units and R³ₐR⁴_{b}SiO_{(4-a-b)/2} units (wherein, R¹, R² and R³ each independently represents a hydroxyl group, methyl group, ethyl group, propyl group, cyclohexyl group or phenyl group, each R⁴ independently represents a vinyl group or allyl group, a represents 0, 1 or 2, and b represents 1 or 2, provided that a+b is 2 or 3), and
partially includes a structure in which at least a portion of the R²₂SiO units are connected in a continuous repeating sequence, wherein the number of units in the repeating sequence is within a range from 5 to 50, preferably from 8 to 40, and more preferably from 10 to 35.

The structure in which at least a portion of the R²₂SiO units are connected in a continuous repeating sequence, and in which the number of units in the repeating sequence is within a range from 5 to 50, refers to a linear diorganopolysiloxane continuous chain structure represented by a general formula (1) shown below.

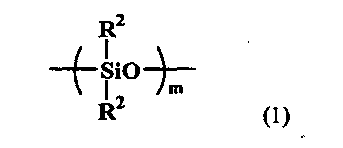

### (wherein m represents an integer of 5 to 50)

In the organopolysiloxane of the component (A), at least a portion of all the R²₂SiO units, and preferably 50 mol% or more (namely, 50 to 100 mol%), and more preferably 80 mol% or more (namely, 80 to 100 mol%), of the R²₂SiO units form a continuous chain structure represented by the general formula (1) within the organopolysiloxane molecule.

In a molecule of the component (A), the presence of the R²₂SiO units causes the polymer molecule to extend in a linear chain-type structure, whereas the R¹SiO_{1.5} units cause branching of the polymer molecule, or the formation of a three dimensional network structure. The R⁴ groups (which each independently represents a vinyl group or allyl group) within the R³ₐR⁴_{b}SiO_{(4-a-b)/2} units perform the role of curing the composition of the present invention by undergoing a hydrosilylation addition reaction with the hydrogen atoms bonded to silicon atoms (namely, SiH groups) of the R³_{c}H_{d}SiO_{(4-c-d)/2} units within the component (B) described below.

The molar ratio between the three essential siloxane units that constitute the component (A), namely the molar ratio of R¹SiO_{1.5} units : R²₂SiO units : R³ₐR⁴_{b}SiO_{(4-a-b)/2} units is preferably within a range from 90 to 24 : 75 to 9 : 50 to 1, and is more preferably within a range from 70 to 28 : 70 to 20 : 10 to 2 (provided the total is 100), as such a ratio yields more favorable properties for the resulting cured product.

The weight average molecular weight of the component (A) determined by gel permeation chromatography (GPC) and referenced against polystyrene standards is preferably within a range from 3,000 to 1,000,000, and particularly preferably from 10,000 to 100,000, as this ensures that the polymer is a solid or semisolid, and provides favorable levels of workability and curability.

An organopolysiloxane having this type of resin structure can be synthesized by combining the compounds that act as the raw materials for each of the units, in amounts that enable the three siloxane units to be formed within the product polymer in the required molar ratio described above, and then conducting a cohydrolysis-condensation, for example, in the presence of an acid.

Examples of the raw materials for the R¹SiO_{1.5} units include chlorosilanes such as MeSiCl₃, EtSiCl₃, PhSiCl₃, propyltrichlorosilane and cyclohexyltrichlorosilane, and the alkoxysilanes such as methoxysilanes that correspond with each of these chlorosilanes.

Examples of the raw material for the R²₂SiO units include the compounds shown below.

ClMe₂ SiO(Me₂ SiO)ⱼ SiMe₂ Cl,

ClMe₂ SiO(Me₂ SiO)ₖ (PhMeSiO)_{L} SiMe₂ Cl,

ClMe₂ SiO(Me₂ SiO)ₖ (Ph₂ SiO)_{L} SiMe₂ Cl,

(HO)Me₂ SiO(Me₂ SiO)ⱼ SiMe₂ (OH),

(HO)Me₂ SiO(Me₂ SiO)ₖ (PhMeSiO)_{L} SiMe₂ (OH),

(HO)Me₂ SiO(Me₂ SiO)ₖ (Ph₂ SiO)_{L} SiMe₂ (OH),

(MeO)Me₂ SiO(Me₂ SiO)ⱼ SiMe₂ (OMe),

(MeO)Me₂ SiO(Me₂ SiO)ₖ (PhMeSiO)_{L} SiMe₂ (OMe),

(MeO)Me₂ SiO(Me₂ SiO)ₖ (Ph₂ SiO)_{L} SiMe₂ (OMe)

(wherein j is an integer of 3 to 48 (average value), k is an integer of 0 to 47 (average value), and L is an integer of 1 to 48 (average value), provided that k+L is an integer of 3 to 48 (average value))

Furthermore, the R³ₐR⁴_{b}SiO(_{d-a-b)/2} units represent any combination of one or more siloxane units selected from amongst R³R⁴SiO units, R³₂R⁴SiO_{0.5} units, R⁴₂SiO units, and R³R⁴₂SiO_{0.5} units. The raw materials for these units include chlorosilanes such as Me₂ViSiCl, MeViSiCl₂, Ph₂ViSiCl and PhViSiCl₂, and alkoxysilanes such as methoxysilanes that correspond with each of these chlorosilanes.

In the present invention, during production of the organopolysiloxane of the component (A) by cohydrolysis and condensation of the raw material compounds described above, the R¹SiO_{1.5} units, R²₂SiO units, R³ₐR⁴_{b}SiO_{(4-a-b)/2} units, or combination of two or more of these units may include siloxane units that contain a silanol group. It is preferable that the organopolysiloxane of the component (A) typically comprises not more than 10 mol% (namely, from 0 to 10 mol%), and preferably not more than 5 mol% (namely, 0 to 5 mol%) of these silanol group-containing siloxane units relative to the combined total of all the siloxane units. Examples of the silanol group-containing siloxane units include (HO)SiO_{1.5} units, R^{2'}(HO)SiO units, (HO)₂SiO units, R⁴(HO)SiO units, R⁴₂(HO)SiO_{0.5} units, R^{3'}R⁴(HO)SiO_{0.5} units, and R⁴(HO)₂SiO_{0.5} units (wherein R^{2'} and R^{3'} are as defined above for R² and R³ respectively with the exception of excluding the hydroxyl group, and R⁴ is as defined above). The hydroxyl group mentioned in relation to R¹, R² and R³ represents the hydroxyl group within these silanol group-containing siloxane units described above.

### - (B) Organohydrogenpolysiloxane having Resin Structure -

The component (B), which represents one of the important structural components of the composition of the present invention, is an organohydrogenpolysiloxane having a resin structure (namely, a three dimensional network-type structure), which consists of R¹SiO_{1.5} units, R²₂SiO units and R³_{c}H_{d}SiO_{(4-c-d)/2} units (wherein, R¹, R² and R³ are each independently as defined above, c represents 0, 1 or 2, and d represents 1 or 2, provided that c+d is 2 or 3), and
partially includes a linear siloxane structure in which at least a portion of the R²₂SiO units are connected in a continuous repeating sequence, wherein the number of units in the repeating sequence is within a range from 5 to 50, is preferably from 8 to 40, and is more preferably from 10 to 35.

In a similar manner to that described for the component (A), the structure in which at least a portion of the R²₂SiO units are connected in a continuous repeating sequence, and in which the number of units in the repeating sequence is within a range from 5 to 50, describes a structure in which at least a portion of the R²₂SiO units, and preferably 50 mol% or more (namely, 50 to 100 mol%), and more preferably 80 mol% or more (namely, 80 to 100 mol%), of the R²₂SiO units within the component (B) form a linear diorganopolysiloxane continuous chain structure represented by the above general formula (1) within the molecule of the component (B).

In a molecule of the component (B), the presence of the R²₂SiO units causes the polymer molecule to extend in a linear chain-type structure, whereas the R¹SiO_{1.5} units cause branching of the polymer molecule, or the formation of a three dimensional network structure. The hydrogen atoms bonded to silicon atoms within the R³_{c}H_{d}SiO_{(4-c-d)/2} units perform the role of curing the composition of the present invention by undergoing a hydrosilylation addition reaction with the alkenyl groups within the component (A).

The molar ratio between the three essential siloxane units that constitute the component (B), namely the molar ratio of R¹SiO_{1.5} units : R²₂SiO units : R³_{c}H_{d}SiO_{(4-c-d)/2} units is preferably within a range from 90 to 24 : 75 to 9 : 50 to 1, and is more preferably within a range from 70 to 28 : 70 to 20 : 10 to 2 (provided the total is 100), as such a ratio yields more favorable properties for the resulting cured product.

The weight average molecular weight of the component (B) determined by GPC and referenced against polystyrene standards is preferably within a range from 3,000 to 1,000,000, and particularly preferably from 10,000 to 100,000, as this provides more favorable levels of workability and curability.

An organohydrogenpolysiloxane having this type of resin structure can be synthesized by combining the compounds that act as the raw materials for each of the units, in amounts that enable the three siloxane units to be formed within the product polymer in the required molar ratio described above, and then conducting a cohydrolysis-condensation, for example, in the presence of an acid.

Examples of the raw materials for the R¹SiO_{1.5} units include chlorosilanes such as MeSiCl₃, EtSiCl₃, PhSiCl₃, propyltrichlorosilane and cyclohexyltrichlorosilane, and the alkoxysilanes such as methoxysilanes that correspond with each of these chlorosilanes.

Examples of the raw material for the R²₂SiO units include the compounds shown below.

ClMe₂ SiO(Me₂ SiO)ⱼ SiMe₂ Cl,

ClMe₂ SiO(Me₂ SiO)ₖ (PhMeSiO)_{L} SiMe₂ Cl,

ClMe₂ SiO(Me₂ SiO)ₖ (Ph₂ SiO)_{L} SiMe₂ Cl,

(HO)Me₂ SiO(Me₂ SiO)ⱼ SiMe₂ (OH),

(HO)Me₂ SiO(Me₂ SiO)ₖ (PhMeSiO)_{L} SiMe₂ (OH),

(HO)Me₂ SiO(Me₂ SiO)ₖ (Ph₂ SiO)_{L} SiMe₂ (OH),

(MeO)Me₂ SiO(Me₂ SiO)ⱼ SiMe₂ (OMe),

(MeO)Me₂ SiO(Me₂ SiO)ₖ (PhMeSiO)_{L} SiMe₂ (OMe),

(MeO)Me₂ SiO(Me₂ SiO)ₖ (Ph₂ SiO)_{L} SiMe₂ (OMe)

(wherein j is an integer of 3 to 48 (average value), k is an integer of 0 to 47 (average value), and L is an integer of 1 to 48 (average value), provided that k+L is an integer of 3 to 48 (average value))

Furthermore, the R³_{c}H_{d}SiO_{(4-c-d)/2} units represent any combination of one or more siloxane units selected from amongst R³HSiO units, R³₂HSiO_{0.5} units, H₂SiO units and R³H₂SiO_{0.5} units. The raw materials for these units include chlorosilanes such as Me₂HSiCl, MeHSiCl₂, Ph₂HSiCl and PhHSiCl₂, and alkoxysilanes such as methoxysilanes that correspond with each of these chlorosilanes.

In the present invention, during production of the organohydrogenpolysiloxane of the component (B) by cohydrolysis and condensation of the raw materials described above, the R¹SiO_{1.5} units, R²₂SiO units, R³_{c}H_{d}SiO_{(4-c-d)/2} units or combination of two or more of these units may include siloxane units that contain a silanol group. It is preferable that the organohydrogenpolysiloxane of the component (B) typically comprises not more than 10 mol% (namely, from 0 to 10 mol%), and preferably not more than 5 mol% (namely, 0 to 5 mol%) of these silanol group-containing siloxane units relative to the combined total of all the siloxane units. Examples of the silanol group-containing siloxane units include (HO)SiO_{1.5} units, R^{2'}(HO)SiO units, (HO)₂SiO units, H(HO)SiO units, H₂(HO)SiO_{0.5} units, R^{3'}H(HO)SiO_{0.5} units, and H(HO)₂SiO_{0.5} units (wherein R^{2'} and R^{3'} are as defined above for R² and R³ respectively with the exception of excluding the hydroxyl group). The hydroxyl group mentioned in relation to R', R² and R³ represents the hydroxyl group within these silanol group-containing siloxane units described above.

The blend amount of the organohydrogenpolysiloxane of the component (B) is sufficient that the molar ratio of hydrogen atoms bonded to silicon atoms (SiH groups) within the component (B) relative to the combined total of vinyl groups and allyl groups within the component (A) is typically within a range from 0.1 to 4.0, preferably from 0.5 to 3.0, and more preferably from 0.8 to 2.0. If this ratio is less than 0.1, then the curing reaction proceeds poorly, and achieving a silicone cured product becomes difficult, whereas if the ratio exceeds 4.0, then a large number of unreacted SiH groups remain within the cured product, which can cause changes in the properties of the cured product over time.

In the present invention, in order to ensure more favorable adhesion, either one or both of the component (A) and the component (B) contain silanol groups. The amount of these silanol groups within the organopolysiloxane of the component (A) or the organohydrogenpolysiloxane of the component (B) is typically within a range from 0.01 to 0.3 mol/100 g, and preferably from 0.05 to 0.2 mol/100 g. If the silanol group content is too high, then the change in hardness following curing is excessive, which is undesirable. In contrast, if the silanol group content is too low, then a satisfactory level of adhesion may not be obtained.

### - (C) Platinum Group Metal-based Catalyst -

This catalyst component is added to accelerate the addition curing reaction within the composition of the present invention, and is typically a platinum-based, palladium-based, or rhodium-based catalyst. Any of the conventional catalysts used for accelerating hydrosilylation reactions may be used as the catalyst. From the viewpoint of cost, platinum-based catalysts such as platinum, platinum black, chloroplatinic acid and platinum compounds such as H₂PtCl₆·pH₂O, K₂PtCl₆, KHPtCl₆·pH₂O, K₂PtCl₄, K₂PtCl₄·pH₂O, PtO₂·pH₂O, PtCl₄.pH₂O, PtCl₂ and H₂PtCl₄·pH₂O (wherein, p represents a positive integer), as well as complexes of these compounds with hydrocarbons such as olefins, alcohols, or vinyl group-containing organopolysiloxanes are preferred. These catalysts may be used either alone, or in combinations of two or more different catalysts.

The blend amount of the component (C) need only be sufficient to ensure effective curing, and a typical amount, calculated as a mass of the platinum group metal relative to the combined mass of the components (A) and (B), is within a range from 0.1 to 500 ppm. An amount of 0.5 to 100 ppm is preferred.

### - (D) Either One or Both of an Opaque Pigment and an Opaque Dye

The component (D) is either one or both of an opaque pigment and an opaque dye, and is added to the composition of the present invention for the purpose of imparting light shielding properties to the composition of the present invention, the cured product thereof, and the opaque silicone adhesive sheet formed therefrom. Any conventional material may be used as the component (D), provided that a layer of thickness 100 µm formed from a cured product of the composition exhibits a light transmittance of not more than 5% across the entire visible light range. Black pigments and/or black dyes are particularly preferred. Specific examples of opaque pigments include opaque inorganic black pigments such as carbon-based pigments and black iron oxide, and specific examples of the carbon-based pigments include carbon black. Specific examples of opaque dyes include opaque organic dyes such as opaque organic black dyes. Although there are no particular restrictions on the particle diameter of the component (D), the particle diameter within a particle size distribution measured by a laser diffraction method using a Cirrus Laser measuring apparatus (for example, the cumulative weight average diameter D₅₀ or the median diameter) is preferably not less than 10 nm, and is preferably within a range from 10 to 1,000 nm, and more preferably from 10 to 500 nm. An opaque inorganic black pigment having a particle diameter of at least 10 nm is ideal as the component (D). The component (D) may employ either a single material or a combination of two or more different materials.

The blend amount of the component (D) is preferably within a range from 0.01 to 10 parts by mass, and more preferably from 0.5 to 5 parts by mass, per 100 parts by mass of the combination of components (A) to (C).

### - (E) Reaction Retarder-

Component (E) is a reaction retarder, and is added to the composition of the present invention for the purpose of preventing the addition reaction from progressing within the composition, resulting in curing of the composition, prior to use. Any of the conventional reaction retarders capable of retarding the addition reaction promoted by the platinum group metal-based catalyst may be used as the component (E), and specific examples include compounds or the like selected from the group consisting of organopolysiloxanes with a high vinyl group content such as tetramethyltetravinylcyclotetrasiloxane, vinylsilane, triallyl isocyanurate, alkyl maleates, acetylene alcohols and silane-modified or siloxane-modified products thereof, hydroperoxides, tetramethylethylenediamine, benzotriazole, and mixtures of the above compounds. The component (E) may employ either a single material or a combination of two or more different materials. The blend amount of the component (E) is preferably within a range from 0.001 to 1.0 parts by mass, and more preferably from 0.005 to 0.5 parts by mass, per 100 parts by mass of the component (A).

### - Other Components -

In addition to the components (A) through (E) described above, the composition of the present invention may also include various conventional additives as required.

### - Inorganic Fillers:

An inorganic filler may be added to the composition of the present invention. Any conventional inorganic filler may be used, and specific examples include reinforcing inorganic fillers such as fumed silica and fumed titanium dioxide, and non-reinforcing inorganic fillers such as calcium carbonate, calcium silicate, titanium dioxide, and zinc oxide. Either a single inorganic filler or a combination of two or more different inorganic fillers may be used. The blend amount of the inorganic filler is typically not more than 600 parts by mass (namely, from 0 to 600 parts by mass) per 100 parts by mass of the combination of components (A) and (B).

### - Adhesion Assistants

In order to impart adhesiveness to the composition of the present invention, an adhesion assistant (adhesion-imparting agent) may be added as required. Either a single adhesion assistant or a combination of two or more different adhesion assistants may be used. Examples of these adhesion assistants include linear or cyclic organosiloxane oligomers of 4 to 50 silicon atoms, and preferably 4 to 20 silicon atoms, comprising at least two, and preferably either two or three, functional groups selected from the group consisting of a hydrogen atom bonded to a silicon atom (SiH group), an alkenyl group bonded to a silicon atom (such as a Si-CH=CH₂ group), an alkoxysilyl group (such as a trimethoxysilyl group) and an epoxy group (such as a glycidoxypropyl group or 3,4-epoxycyclohexylethyl group) within each molecule; organooxysilyl-modified isocyanurate compounds represented by a general formula (2) shown below; hydrolysis-condensation products thereof (organosiloxane-modified isocyanurate compounds); and combination of two or more of these compounds. 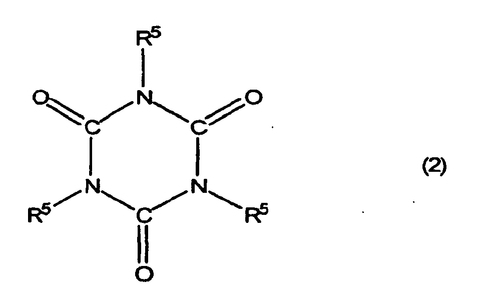 [wherein R⁵ represents an organic group represented by a formula (3) shown below:

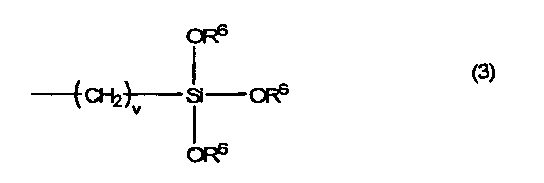

(wherein R⁶ represents a hydrogen atom or a monovalent hydrocarbon group of 1 to 6 carbon atoms, and v represents an integer of 1 to 6, and preferably 1 to 4), or a monovalent hydrocarbon group comprising an aliphatic unsaturated bond, provided that at least one of the R⁵ groups is an organic group of the formula (3).]

Examples of the monovalent hydrocarbon group comprising an aliphatic unsaturated bond represented by R⁵ in the above general formula (2) include alkenyl groups of 2 to 8 carbon atoms, and preferably 2 to 6 carbon atoms, such as a vinyl group, allyl group, propenyl group, isopropenyl group, butenyl group, isobutenyl group, pentenyl group or hexenyl group, and cycloalkenyl groups of 6 to 8 carbon atoms such as a cyclohexenyl group. Furthermore, examples of the monovalent hydrocarbon group represented by R⁶ in the formula (3) include monovalent hydrocarbon groups of 1 to 8 carbon atoms, and preferably 1 to 6 carbon atoms, including alkyl groups such as a methyl group, ethyl group, propyl group, isopropyl group, butyl group, isobutyl group, tert-butyl group, pentyl group or hexyl group, cycloalkyl groups such as a cyclohexyl group, the alkenyl groups and cycloalkenyl groups exemplified above for the R⁵ group, and aryl groups such as a phenyl group. Of these, alkyl groups are preferred.

Specific examples of the adhesion assistant include 1,5-bis(glycidoxypropyl)-1,3,5,7-tetramethylcyclotetrasiloxane, 1-glycidoxypropyl-5-trimethoxysilylethyl-1,3,5,7-tetramethylcyclotetrasiloxane, and the compounds represented by the formulas shown below. 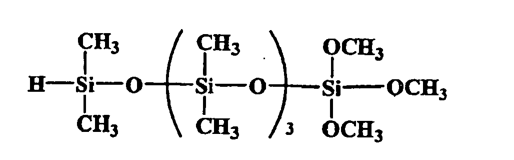 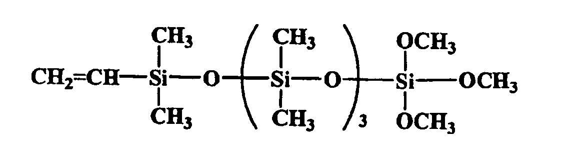 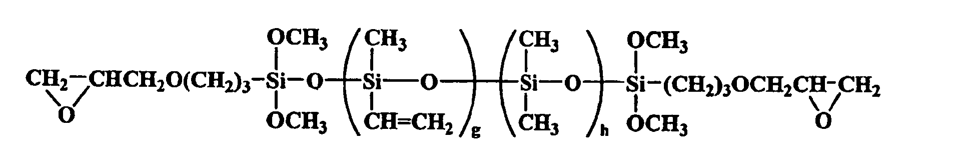 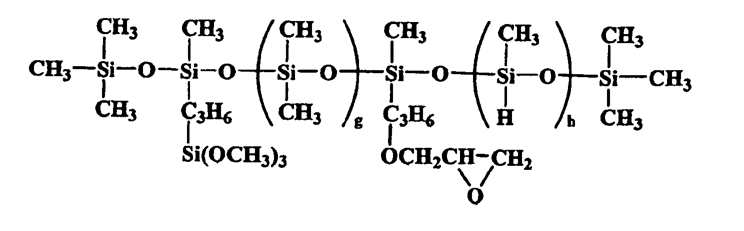 (wherein g and h each represents an integer within a range from 0 to 50, provided that g+h is from 2 to 50, and preferably from 4 to 20.)

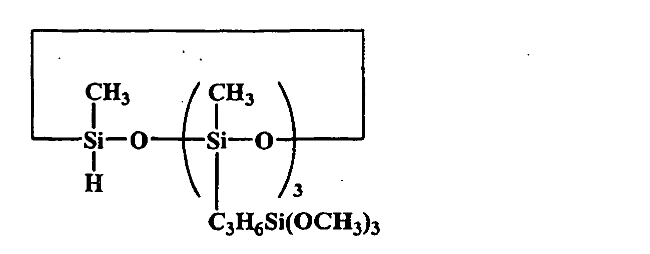

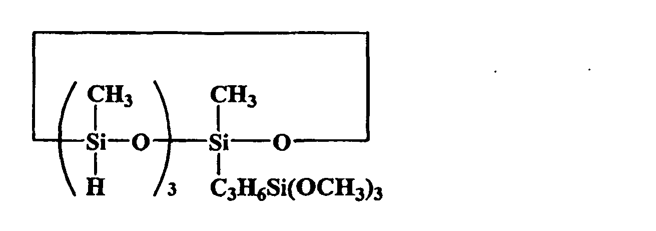

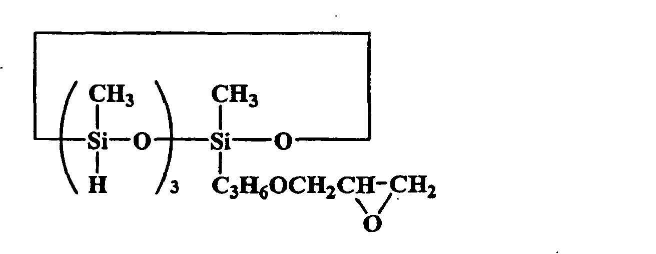

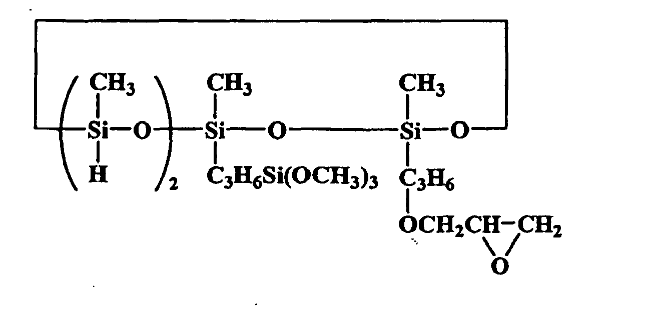

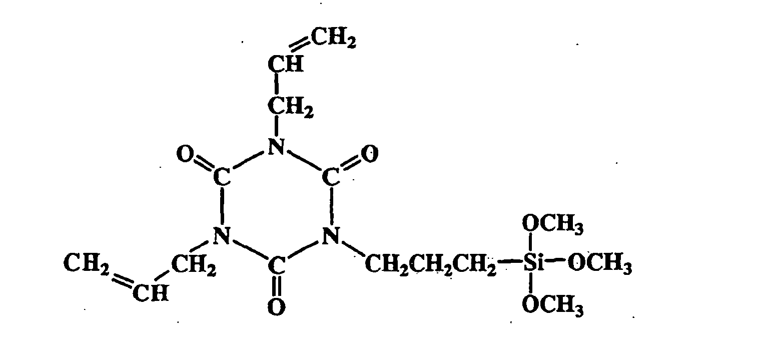

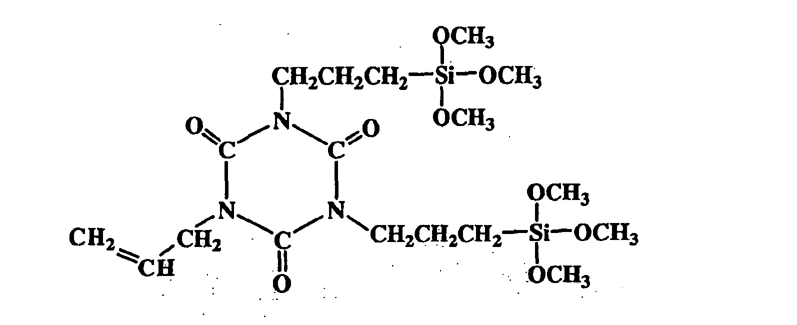

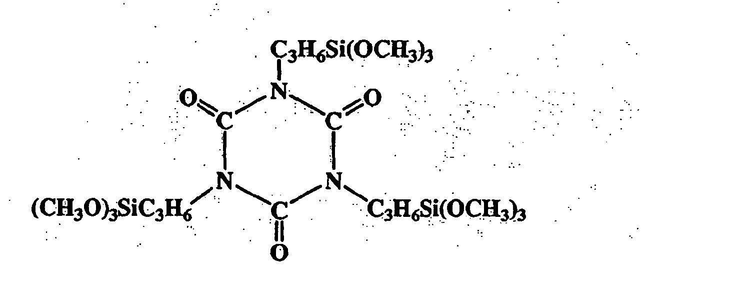

Of the organosilicon compounds described above, organosilicon compounds having a silicon atom-bonded alkoxy group and an alkenyl group or silicon atom-bonded hydrogen atom (SiH group) within each molecule are preferred as they impart the resulting cured product with particularly superior adhesion.

The blend amount of the adhesion assistant is typically not more than 10 parts by mass (namely, from 0 to 10 parts by mass), and is preferably from 0.1 to 8 parts by mass, and more preferably from 0.2 to 5 parts by mass, per 100 parts by mass of the component (A). A blend amount that is too large can have adverse effects on the hardness of the cured product, and may increase the surface tack.

### - Preparation -

The curable silicone resin composition of the present invention is prepared by mixing the required components uniformly together. Typically, the composition is stored at low temperature in a refrigerator or freezer to prevent curing from proceeding, and is then rapidly cured at the time of use, if necessary by applying heat.

### [Cured Product]

The cured product of the present invention can be obtained by heating and curing the composition of the present invention, preferably at a temperature within a range from 50 to 150°C, and more preferably from 60 to 100°C. The curing time is preferably within a range from 1 to 30 minutes, and more preferably from 2 to 10 minutes. Further, post curing may also be conducted by heating at a temperature of 50 to 180°C, and particularly at 70 to 150°C, for a period of 0.1 to 10 hours, and preferably 1 to 4 hours.

A layer of thickness 100 µm formed from the cured product of the present invention exhibits a light transmittance of not more than 5% (namely, from 0 to 5%), and preferably from 0 to 3%, across the entire visible light range. If this light transmittance exceeds 5%, then the light shielding properties of the resulting cured product are more likely to be unsatisfactory, meaning that even if a liquid crystal electrode is coated with the cured product, the protection and light shielding properties imparted to the electrode, and the effect of the cured product in protecting the driver IC from malfunctions, may be inadequate. In the present invention, the light transmittance is measured using a spectrophotometer. Moreover, in the present invention, the visible light range refers to the range from 400 to 700 nm.

### [Opaque Silicone Adhesive Sheet]

The opaque silicone adhesive sheet of the present invention is a sheet formed from the above curable silicone resin composition, wherein the thickness of the sheet is preferably within a range from 10 to 2,000 µm, and more preferably from 50 to 1,000 µm. This thickness may be altered appropriately depending on factors such as the light transmittance of the cured product of the composition.

The opaque silicone adhesive sheet of the present invention can be prepared by using a film coater or press device or the like to apply the composition of the present invention to a substrate. Examples of the substrate include PET films, release agent-coated PET films, and fluororesin-based films.

In a similar manner to the curable silicone resin composition of the present invention, the opaque silicone adhesive sheet of the present invention is typically stored at low temperature in a refrigerator or freezer to prevent curing from proceeding, and is then rapidly cured at the time of use, if necessary by applying heat. The curing conditions are as described above.

### EXAMPLES

A more detailed description of the present invention is provided below based on a series of synthesis examples, examples and comparative examples, although the present invention is in no way limited by the examples presented below. Weight average molecular weight values reported in the following examples refer to values measured by gel permeation chromatography (GPC) and referenced against polystyrene standards.

### [Synthesis Example 1]

### - Vinyl group-containing organopolysiloxane resin (A1) -

1142.1 g (87.1 mol%) of an organosilane represented by PhSiCl₃, 529 g (3.2 mol%) of ClMe₂SiO(Me₂SiO)₃₃SiMe₂Cl, and 84.6 g (9.7 mol%) of MeViSiCl₂ were dissolved in toluene solvent, and the resulting solution was added dropwise to water to effect a cohydrolysis. The product was washed with water, neutralized by alkali washing and dewatered, and the solvent was then stripped, completing synthesis of a vinyl group-containing resin (A1). This resin was a solid with a weight average molecular weight of 62,000 and a melting point of 60°C. The vinyl group content of the resin was 0.05 mol/100 g.

### [Synthesis Example 2]

### - Hydrosilyl group-containing Organopolysiloxane Resin (B1) -

1142.1 g (87.1 mol%) of the organosilane represented by PhSiCl₃, 529 g (3.2 mol%) of ClMe₂SiO(Me₂SiO)₃₃SiMe₂Cl, and 69 g (9.7 mol%) of MeHSiCl₂ were dissolved in toluene solvent, and the resulting solution was added dropwise to water to effect a cohydrolysis. The product was washed with water, neutralized by alkali washing and dewatered, and the solvent was then stripped, completing synthesis of a hydrosilyl group-containing resin (B 1). This resin was a solid with a weight average molecular weight of 58,000 and a melting point of 58°C. The hydrosilyl group content of the resin was 0.05 mol/100 g.

### [Synthesis Example 3]

### - Vinyl group-containing organopolysiloxane resin (A2) -

5710.5 g (81.8 mol%) of the organosilane represented by PhSiCl₃, 2385 g (9.1 mol%) of ClMe₂SiO(Me₂SiO)₁₀SiMe₂Cl, and 361.5 g (9.1 mol%) of Me₂ ViSiCl were dissolved in toluene solvent, and the resulting solution was added dropwise to water to effect a cohydrolysis. The product was washed with water, neutralized by alkali washing and dewatered, and the solvent was then stripped, completing synthesis of a vinyl group-containing resin (A2). This resin was a solid with a weight average molecular weight of 63,000 and a melting point of 63°C. The vinyl group content of the resin was 0.05 mol/100 g.

### [Synthesis Example 4]

### - Hydrosilyl group-containing Organopolysiloxane Resin (B2) -

5710.5 g (81.8 mol%) of the organosilane represented by PhSiCl₃, 2385 g (9.1 mol%) of ClMe₂SiO(Me₂SiO)₁₀SiMe₂Cl, and 283.5 g (9.1 mol%) of Me₂HSiCl were dissolved in toluene solvent, and the resulting solution was added dropwise to water to effect a cohydrolysis. The product was washed with water, neutralized by alkali washing and dewatered, and the solvent was then stripped, completing synthesis of a hydrosilyl group-containing resin (B2). This resin was a solid with a weight average molecular weight of 57,000 and a melting point of 56°C. The hydrosilyl group content of the resin was 0.05 mol/100 g.

### [Example 1]

A silicone resin composition was prepared by combining 189 g of the vinyl group-containing resin (A1) obtained in synthesis example 1, 189 g of the hydrosilyl group-containing resin (B1) obtained in synthesis example 2, 0.6 g of the acetylene alcohol-based compound ethynylcyclohexanol as a reaction retarder, 0.2 g of a 1% by mass octyl alcohol solution of chloroplatinic acid, 2 g of Denka Black (a product name for a carbon black, manufactured by Denki Kagaku Kogyo K.K., particle diameter: approximately 35 nm), and 4 g of an adhesion assistant represented by a chemical formula shown below: 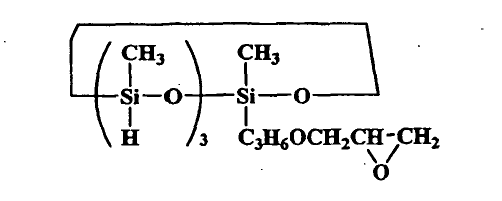 and then mixing the resulting mixture thoroughly in a planetary mixer heated to 60°C.

This composition was applied to an EPFT film using a coater, thus forming a black sheet with a thickness of 200 µm or 100 µm. This black sheet was dried by heating at 80°C for 5 minutes, yielding an uncured (A stage) film.

### 1. Mechanical Properties

The obtained film was measured for tensile strength (thickness: 0.2 mm), hardness (measured using a D type spring tester, thickness: 6 mm (namely, 0.2 mm x 30 layers)), and elongation (thickness: 0.2 mm) in accordance with the methods prescribed in JIS K 6301.

### 2. Surface Tack

The tack of the surface of the obtained film was ascertained by finger touch. In addition, the film was placed in a sample of commercially available silver powder (average particle diameter: 5 µm), and following removal from the powder, the film was blown with air to test whether the silver powder that had adhered to the film surface like dust could be removed.

The results of these measurements are shown in Table 1.

### 3. Electrical Continuity Test under Applied Voltage

In order to evaluate the reliability of the adhesive sheet of the present invention when used for protecting an LCD electrode, the test described below was performed. Namely, the aforementioned black sheet was placed on the surface of comb-shaped electrodes (line width: 25 µm, spacing between lines: 25 µm, overall dimensions: 10 mm x 10 mm, material: aluminum), pressure was applied from above, and the sheet was cured by heating at 80°C for 10 minutes, thus forming an evaluation sample. Each of the thus obtained evaluation samples was subjected to a continuity test under conditions including a temperature of 85°C, a relative humidity of 85%, and a constant applied voltage of 5 V The proportion of samples in which electrode corrosion resulted in a disconnection was recorded relative to the total number of samples (50 samples). The results are shown in Table 2.

### 4. Light Transmittance

The light transmittance of the obtained film (thickness: 0.1 mm) was measured across the entire visible light range using a spectrophotometer. The results are shown in Table 3.

### [Example 2]

In example 1, with the exception of replacing the vinyl group-containing resin (A1) obtained in synthesis example 1 and the hydrosilyl group-containing resin (B1) obtained in synthesis example 2 with the vinyl group-containing resin (A2) obtained in synthesis example 3 and the hydrosilyl group-containing resin (B2) obtained in synthesis example 4 respectively, a silicone resin composition was prepared and evaluated in the same manner as example 1. The results are shown in Tables 1 to 3.

### [Comparative Example 1]

In example 1, with the exceptions of replacing the silicone resin composition with a commercially available ultraviolet-curable silicone resin KJC-7805 (a product name, manufactured by Shin-Etsu Chemical Co., Ltd.), and generating the cured product by performing an irradiation with ultraviolet light having a wavelength of 365 nm and an intensity of 80 W/cm² for 2 seconds at 40°C instead of heating for 10 minutes at 80°C, evaluations were conducted in the same manner as example 1. The results are shown in Tables 1 to 3.

### [Comparative Example 2]

In example 1, with the exceptions of replacing the silicone resin composition with a commercially available condensation-type room temperature-curable silicone resin X-35-116BS (a product name, manufactured by Shin-Etsu Chemical Co., Ltd.), and generating the cured product by leaving the resin composition to stand in the open air for 24 hours at room temperature instead of heating for 10 minutes at 80°C, evaluations were conducted in the same manner as example 1. The results are shown in Tables 1 to 3.

**[Table 1]**

| | Example 1 | Example 2 | Comparative example 1 | Comparative example 2 |
|---|---|---|---|---|
| SiH/SiVi (*1) | 1.0 | 1.0 | 1.0 | 1.0 |
| Curing conditions | 80°C / 10 min. | 80°C / 10 min. | As described herein | As described herein |
| Hardness (type D) | 40 | 40 | 20 (type A) | 50 (type A) |
| Elongation (%) | 15 | 15 | 100 | 50 |
| Tensile strength (MPa) | 7 | 6 | 1 | 1 |
| Silver powder adhesion caused by surface tack | No | No | Yes | Yes |

| | | | | |
|---|---|---|---|---|
| (Note) *1: The molar ratio of silicon atom-bonded hydrogen atoms within the hydrosilyl group-containing resin relative to silicon atom-bonded vinyl groups within the vinyl group-containing resin. | | | | |

**[Table 2]**

| | Example 1 | Example 2 | Comparative example 1 | Comparative example 2 |
|---|---|---|---|---|
| 100 hours | 0/50 | 0/50 | 0/50 | 0/50 |
| 200 hours | 0/50 | 0/50 | 0/50 | 0/50 |
| 300 hours | 0/50 | 0/50 | 5/50 | 0/50 |
| 400 hours | 0/50 | 0/50 | 15/50 | 0/50 |
| 500 hours | 0/50 | 0/50 | 25/50 | 10/50 |

**[Table 3]**

| Measuring wavelength | Example 1 | Example 2 | Comparative example 1 | Comparative example 2 |
|---|---|---|---|---|
| 400 nm | 0% | 0% | 0% | 80% |
| 700 nm | 0% | 0% | 0% | 90% |

## Claims

1. A curable silicone resin composition that is solid at room temperature, the composition comprising:
(A) an organopolysiloxane having a resin structure, consisting of R¹SiO_{1.5} units, R²₂SiO units and R³ₐR⁴_{b}SiO_{(4-a-b)/2} units, wherein, R¹, R² and R³ each independently represents a hydroxyl group, methyl group, ethyl group, propyl group, cyclohexyl group or phenyl group, each R⁴ independently represents a vinyl group or allyl group, a represents 0, 1 or 2, and b represents 1 or 2, provided that a+b is 2 or 3, and
including a structure in which at least a portion of the R²₂SiO units are connected in a continuous repeating sequence, and a number of units in the repeating sequence is within a range from 5 to 50,
(B) an organohydrogenpolysiloxane having a resin structure, consisting of R¹SiO_{1.5} units, R²₂SiO units and R³_{c}H_{d}SiO_{(4-c-d)/2} units, wherein, R¹, R² and R³ are each independently as defined above, c represents 0, 1 or 2, and d represents 1 or 2, provided that c+d is 2 or 3, and
including a structure in which at least a portion of the R²₂SiO units are connected in a continuous repeating sequence, and a number of units in the repeating sequence is within a range from 5 to 50:
in sufficient amount that a molar ratio of hydrogen atoms bonded to silicon atoms within component (B) relative to a combined total of vinyl groups and allyl groups within component (A) is within a range from 0.1 to 4.0,
(C) a platinum group metal-based catalyst: in an effective amount,
(D) either one or both of an opaque pigment and an opaque dye, and
(E) a reaction retarder, wherein
a layer of thickness 100 µm formed from a cured product of the composition exhibits a light transmittance - measured using a spectrophotometer - of not more than 5% across the entire visible light range;
wherein either one or both of component (A) and component (B) comprises a silanol group; and
wherein when component (A) comprises a silanol group, then a silanol group content within component (A) is within a range from 0.01 to 0.3 mol/100 g, and when component (B) comprises a silanol group, then a silanol group content within component (B) is within a range from 0.01 to 0.3 mol/100 g.

2. The curable silicone resin composition according to claim 1, wherein within component (A), a molar ratio of R¹SiO_{1.5} units : R²₂SiO units : R³ₐR⁴_{b}SiO(_{4-a-b)/2} units is within a range from 90 to 24 : 75 to 9 : 50 to 1, provided that a total thereof is 100.

3. The curable silicone resin composition according to any one of claims 1 or 2, wherein within component (B), a molar ratio of R¹SiO_{1.5} units : R²₂SiO units : R³_{c}HdSiO_{(4-c-d)/2} units is within a range from 90 to 24 : 75 to 9 : 50 to 1, provided that a total thereof is 100.

4. The curable silicone resin composition according to any one of claims 1 to 3, wherein component (D) is a black pigment, a black dye, or a combination thereof.

5. The curable silicone resin composition according to any one of claims 1 to 3, wherein component (D) is an opaque inorganic black pigment, an opaque organic dye, or a combination thereof.

6. The curable silicone resin composition according to any one of claims 1 to 5, wherein component (D) is an opaque inorganic black pigment with a particle diameter of at least 10 nm.

7. A silicone resin cured product obtained by curing the curable silicone resin composition defined in any one of claims 1 to 6.

8. A cured product obtained by curing a curable silicone resin composition comprising components (A) to (E) defined in claim 1, the cured product having a light transmittance of not more than 5% across the entire visible light range when formed as a layer with a thickness of 100 µm.

9. An opaque silicone adhesive sheet formed from the curable silicone resin composition defined in any one of claims 1 to 6.

10. A method of protecting an electronic component and shielding the electronic component from light, the method comprising adhering or pressure bonding the curable silicone resin composition as defined in any of claims 1 to 6 to a surface of the electronic component, and then curing the composition.

11. The method according to claim 10, wherein the electronic component is an electrode of a liquid crystal display.

12. Use of the curable silicone resin composition as defined in any of claims 1 to 6 for protecting an electronic component and shielding the electronic component from light.

13. The use according to claim 12, wherein the electronic component is an electrode of a liquid crystal display.

## Patentansprüche

1. Aushärtbare Siliconharzzusammensetzung, die bei Raumtemperatur fest ist, wobei die Zusammensetzung Folgendes umfasst:
(A) ein Organopolysiloxan, das eine Harzstruktur aufweist, die aus R¹SiO₁,₅-Einheiten, R²₂SiO-Einheiten und R³ₐR⁴_{b}SiO_{(4-a-b)/2}-Einheiten besteht, wobei R¹, R² und R³ jeweils unabhängig eine Hydroxylgruppe, Methylgruppe, Ethylgruppe, Propylgruppe, Cyclohexylgruppe oder Phenylgruppe darstellen und jedes R⁴ unabhängig eine Vinylgruppe oder Allylgruppe darstellt, a 0, 1 oder 2 darstellt und b 1 oder 2 darstellt, vorausgesetzt, dass a+b 2 oder 3 beträgt, und
eine Struktur umfasst, wobei mindestens ein Teil der R²₂SiO-Einheiten in einer kontinuierlichen Wiederholungssequenz verbunden sind und eine Anzahl von Einheiten in der Wiederholungssequenz innerhalb eines Bereichs von 5 bis 50 liegt,
(B) ein Organowasserstoffpolysiloxan, das eine Harzstruktur aufweist, die aus R¹SiO_{1,5}-Einheiten, R²₂SiO-Einheiten und R³_{c}H_{d}SiO_{(4-c-d)/2}-Einheiten besteht, wobei R¹, R² und R³ jeweils unabhängig die obige Definition aufweisen, c 0, 1 oder 2 darstellt und d 1 oder 2 darstellt, vorausgesetzt, dass c+d 2 oder 3 beträgt, und
eine Struktur umfasst, wobei mindestens ein Teil der R²₂SiO-Einheiten in einer kontinuierlichen Wiederholungssequenz verbunden sind und eine Anzahl von Einheiten in der Wiederholungssequenz innerhalb eines Bereichs von 5 bis 50 liegt:
in ausreichender Menge, dass ein Molverhältnis von Wasserstoffatomen, die an Siliciumatome innerhalb der Komponente (B) gebunden sind, im Vergleich mit einem kombinierten Gesamten von Vinylgruppen und Allylgruppen innerhalb der Komponente (A) innerhalb eines Bereichs von 0,1 bis 4,0 liegt,
(C) einen Katalysator auf der Basis eines Platingruppenmetalls: in einer wirksamen Menge,
(D) entweder eines oder beide von einem opaken Pigment und einem opaken Farbstoff und
(E) einen Reaktionsverzögerer, wobei
eine Schicht mit einer Dicke von 100 µm, die aus einem ausgehärteten Produkt der Zusammensetzung gebildet ist, einen Lichtdurchlässigkeitsgrad - unter Anwendung eines Spektrophotometers gemessen - von nicht mehr als 5 % über den gesamten Bereich von sichtbarem Licht aufweist,
wobei entweder eine oder beide der Komponente (A) und Komponente (B) eine Silanolgruppe umfasst/umfassen; und
wobei, wenn die Komponente (A) eine Silanolgruppe umfasst, ein Silanolgruppengehalt innerhalb der Komponente (A) innerhalb eines Bereichs von 0,01 bis 0,3 Mol/100 g liegt, und wenn die Komponente (B) eine Silanolgruppe umfasst, ein Silanolgruppengehalt innerhalb der Komponente (B) innerhalb eines Bereichs von 0,01 bis 0,3 Mol/100 g liegt.

2. Aushärtbare Siliconharzzusammensetzung nach Anspruch 1, wobei innerhalb der Komponente (A) ein Molverhältnis von R¹SiO_{1,5}-Einheiten : R²₂SiO-Einheiten : R³ₐR⁴_{b}SiO_{(4-a-b)/2}-Einheiten innerhalb eines Bereichs von 90 bis 24 : 75 bis 9 : 50 bis 1 liegt, vorausgesetzt, dass ein Gesamtes davon 100 beträgt.

3. Aushärtbare Siliconharzzusammensetzung nach einem der Ansprüche 1 oder 2, wobei innerhalb der Komponente (B) ein Molverhältnis von R¹SiO_{1,5}-Einheiten : R²₂SiO-Einheiten : R³_{c}H_{d}SiO_{(4-c-d)/2}-Einheiten innerhalb eines Bereichs von 90 bis 24 : 75 bis 9 : 50 bis 1 liegt, vorausgesetzt, dass ein Gesamtes davon 100 beträgt.

4. Aushärtbare Siliconharzzusammensetzung nach einem der Ansprüche 1 bis 3, wobei die Komponente (D) ein schwarzes Pigment, ein schwarzer Farbstoff oder eine Kombination davon ist.

5. Aushärtbare Siliconharzzusammensetzung nach einem der Ansprüche 1 bis 3, wobei die Komponente (D) ein opakes anorganisches schwarzes Pigment, ein opaker organischer Farbstoff oder eine Kombination davon ist.

6. Aushärtbare Siliconharzzusammensetzung nach einem der Ansprüche 1 bis 5, wobei die Komponente (D) ein opakes anorganisches schwarzes Pigment mit einem Teilchendurchmesser von mindestens 10 nm ist.

7. Produkt aus ausgehärtetem Siliconharz, das durch Aushärten einer aushärtbaren Siliconharzzusammensetzung, die in einem der Ansprüche 1 bis 6 definiert ist, erhalten wird.

8. Ausgehärtetes Produkt, das durch Aushärten einer aushärtbaren Siliconharzzusammensetzung erhalten wird, die die Komponenten (A) bis (E), die in Anspruch 1 definiert sind, umfasst, wobei das ausgehärtete Produkt einen Lichtdurchlässigkeitsgrad von nicht mehr als 5 % über den gesamten Bereich von sichtbarem Licht aufweist, wenn es als Schicht mit einer Dicke von 100 µm gebildet wird.

9. Opake adhäsive Siliconplatte, die aus der in einem der Ansprüche 1 bis 6 definierten aushärtbaren Siliconharzzusammensetzung gebildet ist.

10. Verfahren zum Schützen einer elektronischen Komponente und Abschirmen der elektronischen Komponente gegen Licht, wobei das Verfahren das Befestigen oder Druckbondieren der aushärtbaren Siliconharzzusammensetzung, wie in einem der Ansprüche 1 bis 6 definiert, an einer Oberfläche der elektronischen Komponente und dann das Aushärten der Zusammensetzung umfasst.

11. Verfahren nach Anspruch 10, wobei die elektronische Komponente eine Elektrode einer Flüssigkristallanzeige ist.

12. Verwendung der aushärtbaren Siliconharzzusammensetzung wie in einem der Ansprüche 1 bis 6 definiert zum Schützen einer elektronischen Komponente und Abschirmen der elektronischen Komponente gegen Licht.

13. Verwendung nach Anspruch 12, wobei die elektronische Komponente eine Elektrode einer Flüssigkristallanzeige ist.

## Revendications

1. Composition de résine de silicone durcissable qui est solide à température ambiante, la composition comprenant :
(A) un organopolysiloxane possédant une structure de résine, constitué de motifs R¹SiO_{1,5}, de motifs R²₂SiO et de motifs R³ₐR⁴_{b}SiO_{(4-a-b)/2} où R¹, R² et R³ représentent chacun indépendamment un groupe hydroxyle, un groupe méthyle, un groupe éthyle, un groupe propyle, un groupe cyclohexyle ou un groupe phényle, chaque R⁴ représente indépendamment un groupe vinyle ou un groupe allyle, a représente 0, 1 ou 2, et b représente 1 ou 2, à condition que a+b vaille 2 ou 3, et
comprenant une structure dans laquelle au moins une partie des motifs R²₂SiO est reliée dans une séquence répétitive continue, et un nombre de motifs dans la séquence répétitive est compris dans la plage allant de 5 à 50,
(B) un organohydrogénopolysiloxane comprenant une structure de résine constitué de motifs R¹SiO_{1,5}, de motifs R²₂SiO et de motifs R³_{c}H_{d}SiO_{(4-c-d)/2} où R¹, R² et R³ sont chacun indépendamment tels que définis ci-dessus, c représente 0, 1 ou 2, et d représente 1 ou 2, à condition que c+d vaille 2 ou 3, et
comprenant une structure dans laquelle au moins une partie des motifs R²₂SiO est reliée dans une séquence répétitive continue, et un nombre de motifs dans la séquence répétitive est compris dans la plage allant de 5 à 50,
en une quantité suffisante pour qu'un rapport molaire des atomes d'hydrogène liés aux atomes de silicium dans le composant (B) par rapport au total combiné de groupes vinyle et des groupes allyle dans le composant (A) soit compris dans une plage allant de 0,1 à 4,0,
(C) un catalyseur à base d'un métal du groupe du platine, en une quantité suffisante,
(D) un pigment opaque et/ou un colorant opaque, et
(E) un retardateur de réaction,
dans laquelle une couche d'une épaisseur de 100 µm formée à partir d'un produit durci de la composition présente une transmittance de lumière, mesurée en utilisant un spectrophotomètre, de pas plus de 5 % sur toute la place de lumière visible ;
dans laquelle le composant (A) et/ou le composant (B) comprennent un groupe silanol ; et
dans laquelle lorsque le composant (A) comprend un groupe silanol, alors la teneur en groupe silanol dans le composant (A) est comprise dans la plage allant de 0,01 à 0,3 mol/100 g, et lorsque le composant (B) comprend un groupe silanol, alors la teneur en groupe silanol dans le composant (B) est comprise dans la plage allant de 0,01 à 0,3 mol/100 g.

2. Composition de résine de silicone durcissable selon la revendication 1, dans laquelle dans le composant (A), un rapport molaire des motifs R¹SiO_{1,5} : motifs R²₂SiO : motifs R³ₐR⁴_{b}SiO_{(4-a-b)/2} est compris dans une plage allant de 90 à 24 : 75 à 9 : 50 à 1, à condition qu'un total de celui-ci soit égal à 100.

3. Composition de résine de silicone durcissable selon la revendication 1 ou 2, dans laquelle dans le composant (B), un rapport molaire des motifs R¹SiO_{1,5} : motifs R²₂SiO : motifs R³_{c}H_{d}SiO_{(4-c-d)/2} est compris dans une plage allant de 90 à 24 : 75 à 9 : 50 à 1, à condition qu'un total de celui-ci soit égal à 100.

4. Composition de résine de silicone durcissable selon l'une quelconque des revendications 1 à 3, dans laquelle le composant (D) est un pigment noir, un colorant noir, ou une combinaison de ceux-ci.

5. Composition de résine de silicone durcissable selon l'une quelconque des revendications 1 à 3, dans laquelle le composant (D) est un pigment noir inorganique opaque, un colorant organique opaque, ou une combinaison de ceux-ci.

6. Composition de résine de silicone durcissable selon l'une quelconque des revendications 1 à 5, dans laquelle le composant (D) est un pigment noir inorganique opaque ayant un diamètre de particule d'au moins 10 nm.

7. Produit durci de résine de silicone obtenu par durcissement de la composition de résine de silicone durcissable définie selon l'une quelconque des revendications 1 à 6.

8. Produit durci obtenu par durcissement d'une composition de résine de silicone durcissable comprenant les composants (A) à (E) selon la revendication 1, le produit durci possédant une transmittance de lumière de pas plus de 5 % sur toute la plage de lumière visible lorsqu'il est formé sous la forme d'une couche ayant une épaisseur de 100 µm.

9. Feuille adhésive de silicone opaque formée à partir de la composition de résine de silicone durcissable telle que définie selon l'une quelconque des revendications 1 à 6.

10. Procédé de protection d'un composant électronique et de préservation contre la lumière du composant électronique, le procédé comprenant l'adhérence ou la liaison par pression de la composition de résine de silicone durcissable telle que définie selon l'une quelconque des revendications 1 à 6 à une surface du composant électronique, puis le durcissement de la composition.

11. Procédé selon la revendication 10, dans lequel le composant électronique est une électrode d'un dispositif à cristaux liquides.

12. Utilisation de la composition de résine de silicone durcissable telle que définie selon l'une quelconque des revendications 1 à 6 pour protéger un composant électronique et préserver de la lumière le composant électronique.

13. Utilisation selon la revendication 12, dans laquelle le composant électronique est une électrode d'un dispositif à cristaux liquides.
